# FASCICULE DE BREVET EUROPEEN

(11) **EP 1 940 678 B1**
(45) Date de publication et mention de la délivrance du brevet: **26.08.2009**
(21) Numéro de dépôt: 06819088.3
(22) Date de dépôt: 17.10.2006
(51) Int. Cl.: B63B 1/04, B63B 1/34

(54) **COQUE POUR ENGIN DE NAVIGATION DONT LA CARÈNE PERMET D'AUGMENTER LES PERFORMANCES DE GLISSE SUR L'EAU**
RUMPF FÜR SEGELBOOT MIT EINEM DIE WASSERGLEITEIGENSCHAFTEN VERBESSERNDEN BODEN
HULL FOR SAILING CRAFT WHEREOF THE BOTTOM ENABLES WATER GLIDING PERFORMANCES TO BE ENHANCED

(30) Priorité: 25.10.2005 FR 0553247
(43) Date de publication de la demande: 09.07.2008
(73) Titulaire: Oeino, Laurence, 06160 Juan-les-Pins (FR); Oeino, Espen, 06160 Juan-les-Pins (FR); Chauveau, Jean-Claude, 06130 Grasse (FR); Petit, Olivier, 13600 La Ciotat (FR)
(72) Inventeur: CHAUVEAU, Jean-Claude, F-06130 Grasse (FR); PETIT, Olivier, F-13600 La Ciotat (FR)
(74) Mandataire: Decobert, Jean-Pascal
(86) Numéro de dépôt international: PCT/EP2006/067510
(87) Numéro de publication internationale: WO 2007/048737

(56) Documents cités:
- FR-A- 1 243 460
- US-A- 4 932 347
- US-A- 5 522 333
- US-B2- 6 631 690

## Description

L'invention a pour objet une coque pour engin de navigation permettant d'augmenter les performances de glisse sur l'eau.

La coque selon l'invention a une carène qui a un profil particulier formant un rail profilé de l'étrave jusqu'au tableau arrière.

Selon les applications et la taille des engins de navigation, la carène peut être adaptée pour comporter un ou plusieurs rails profilés.

La coque est plus particulièrement destinée aux engins de navigation à un ou plusieurs moteurs.

La coque selon l'invention évite les gerbes d'eau à bâbord et à tribord.

La coque récupère ce flux d'eau mélangé à des bulles d'air. Cette masse est donc compressible, elle absorbe bien les chocs sur les coques.

Le flux dirigé exclusivement après le tableau arrière permet un déjaugeage rapide.

La surface de frottement de la coque sur l'eau est nettement diminuée ce qui augmente d'autant la vitesse à puissance égale.

Par rapport à une coque classique, la consommation est diminuée par deux à vitesse égale après déjaugeage.

La vague créée par une coque classique n'existe plus et l'énergie de cette vague canalisée sous la coque à couloirs améliore la vitesse, le confort (blocage des bulles d'air) et la tenue en mer (direction et roulis) grâce aux couloirs.

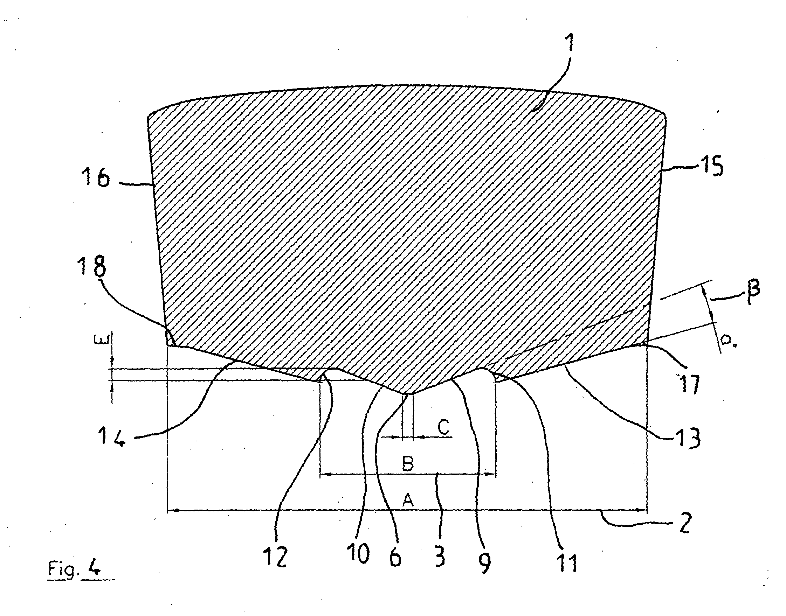

L'état de la technique peut être défini par les brevets suivants :
- DE 4210546*: la coque a une section avant fuselée, une section du milieu et une section arrière ; chaque section est faite de deux sections latérales symétriques jointes au niveau de la ligne de soudure de la quille ; une poupe complète la coque ; la section du milieu peut être faite d'un seul moule ; les plats-bords sont formés dans un rebord pour lier le pont et la cabine ; les sections latérales ont un profil incliné sous la coque et ont une ligne enveloppée à mi chemin des côtés pour le profil aérodynamique et la raideur. Aucune traverse séparée n'est requise. UTILISATION* / *AVANTAGE - léger petit bateau, bateau à rames, dériveur. Usage minimum d'acier inoxydable, construction économique qui ne requière pas de traverses.*
- US-4.875.425 *: l'invention décrit une forme de coque pour un bateau dont la coque a une base en V et est construite et prévue pour un usage dans un mode de déplacement ; la coque comprend une proue qui incorpore une pluralité de rainures latérales ou, alternativement, une formation latérale simple et qui s'étend sous la base ou la ligne de donnée de la coque dans une configuration en forme de lame aérodynamique ; de façon préférée, la coque a des angles en V à angles morts dont l'ampleur dans la zone des traverses de la coque n'est pas inférieure à 20% ; les surfaces s'étendant entre la quille et la longueur de la ligne de flottaison ne sont pas planes et ont une géométrie convexe et concave développable, toutes les lignes de la partie arrière de la coque ayant une inclinaison négative entre substantiellement ½° et substantiellement 4*° *L'invention permet d'utiliser les avantages connus des formes de coques à base en V pour des vaisseaux à mode de déplacements ayant de larges déplacement où, jusque là, les coques ayant une forme renflée prédominent largement.*
- JP-60042187 *: OBJET : Supprimer la production de vagues d'étrave et réduire la résistance à la pression de la vague en disposant des lames symétriques dans le voisinage de la ligne de tirant d'eau et en supprimant le tourbillon des vagues d'étrave avec la pointe du tourbillon produit par lesdites lames. COMPOSITON : une lame symétrique triangulaire ayant une section croisée aérodynamique est fixée dans le voisinage de la ligne de tirant d'eau de la coque ; ladite lame s'étendant devant, à droite et à gauche de la proue ; la position arrière et la largeur de la lame sont conçues de telle sorte que la fin de la lame viendra près du bord avant de la région de la vague d'étrave devant être produit pour l'avancée de la coque ; suivant l'avancée de la coque dans la direction (i), un flux de circulation est produit autour de la coupe transversale de la lame et est isolé de la fin de la lame pour produire la pointe du tourbillon ; étant donné que la direction rotative de la pointe du tourbillon est inversée par rapport à la rotation du tourbillon crée par la pression de la vague, ils vont interféré pour annuler le tourbillon créé par la pression de la vague.*
- US-5.522.333*: l'invention décrit dans un bateau de type catamaran, comportant un système à propulsion et une coque principale positionnée pour se déplacer au dessus de la surface de l'eau, la coque s'étendant longitudinalement vers l'avant, la combinaison comprenant: deux flotteurs, chacun espacé sous la coque principale, les flotteurs s'étendant vers l'avant ; des moyens de support portés par la coque principale et supportant les flotteurs, par quoi les flotteurs sont au moins totalement submergés sous le niveau de l'eau quand le bateau est en charge et au repos ; les flotteurs ayant des platines associées positionnées de telle sorte que les flotteurs peuvent planer au dessus de la surface de l'eau aux vitesses habituelles de planage du bateau ; les moyens de support ayant une structure d'arête principale aérodynamique et une structure d'ailette supérieure ; et les moyens de support ont une épaisseur latérale à un emplacement longitudinal situé à un niveau inférieur à celui des flotteurs et qui est inférieure à la largueur maximum de chaque flotteur à l'emplacement longitudinal*.
- GB-2.383.779 *: un navire a une coque dont les côtés forment, au niveau de la coupe transversale, une forme en « V » dont chaque côté s'étend en un seul plan afin de rencontrer l'autre au niveau de l'axe longitudinal central du navire ; le navire comprend également une quille qui s'étend le long de la coque et qui s'étend vers le bas à partir du point de rencontre des deux côtés ; l'angle (α,* *figure 4**) formé entre chaque côté de la coque et de la quille est égal à 120*° *; cette disposition confère au navire, par rapport aux formes de coques conventionnelles, une meilleure flottabilité, une meilleure stabilité ainsi qu'un meilleur aérodynamisme.*
- US-2005/034647 *: Cette invention est une technologie spécifique qui intègre la mécanique et l'aérodynamisme pour permettre à la partie arrière basse de la coque du navire de fluctuer vers le haut ou vers le bas pour contrebalancer la surface de l'eau et stabiliser le mouvement du navire lorsque celui-ci est en marche ; l'invention utilise également des charnières pour assembler efficacement les coques de poupe et de proue et met en place des absorbeurs de chocs dans sa conception, ce qui amortit l'impact des facteurs extérieurs et aérodynamise le mouvement global du navire quand celui-ci est en marche.*
- FR-2.765.180 *: le secteur technique de l'invention est le domaine de la construction navale, plus particulièrement de la fabrication des coques de navire ; une monocoque à stabilisateurs arrières ou dite encore pseudotrimaran, de navire à grande vitesse comporte un flotteur central et deux flotteurs latéraux de longueur plus courte, situés vers l'arrière du flotteur central et reliés à celui-ci par des bras de liaison carénés ; suivant l'invention les carènes des trois flotteurs sont toujours en partie immergée quelle que soit la vitesse, celle des flotteurs latéraux comportent des ailerons immergés orientables et le coefficient de finesse des trois carènes est compris entre 0,25 et 0,35, avec un rapport de leur longueur sur leur largeur compris entre 12 et 20 et un rapport de longueur de la carène centrale sur la longueur des* carènes *latérales entre 2,5 et 4,5*.
- US 4 932 347 *: Une coque de jet-ski comprenant une section supérieure et une inférieure jointes le long d'un bord périphérique, ledit bord est arrangé pour s'étendre au-dessus de la ligne de flottaison normale. Selon la présente invention, la section inférieure de la coque comprend 1) une section centrale s'étendant de la proue du ski jusqu'à la poupe de celui-ci, 2) une section concave disposée de chaque côté de la section centrale, 3) une paire de murs latéraux joints à la section supérieure de la coque au niveau du bord périphérique et s'étendant vers le bas et vers l'intérieur du bord périphérique et 4) une section de transition joignant la portion inférieure de chaque mur latéral en une section concave respective. Chaque section concave définit un canal s'étendant substantiellement le long de la coque pour canaliser l'eau au travers pour prévenir le dérapage de la coque durant les tours.*
- *Dans ce brevet, les plans inclinés centraux ne se terminent pas par deux profils en quart de cercle.*

La coque pour engin de navigation a une carène qui a un profil particulier, ladite carène est caractérisée par au moins un rail profilé de l'étrave jusqu'au tableau arrière, ledit rail est formé d'une semelle axiale plate reliant deux couloirs parallèles de l'étrave au tableau arrière, de même largeur, de même profondeur de la zone d'entrée d'eau à la sortie du tableau arrière, les couloirs issus de la semelle ont un profil en coupe de part et d'autre de la semelle pour former deux plans inclinés en V et se terminent par deux profils en quart d'arc de cercle qui se prolongent ensuite par deux autres plans inclinés formant un deuxième V moins incliné que le premier qui vont vers les oeuvres mortes, se terminent par deux parties plates au droit desdits plats-bords.

Selon un mode de réalisation, la largeur des couloirs a une taille qui varie en fonction du poids de la coque et de l'application de l'engin nautique selon si celui-ci est conçu essentiellement pour la vitesse ou pas.

La largeur desdits couloirs a une dimension qui représente 1/3 à 40% de la largeur de la coque.

Les deux plans inclinés en V des couloirs sont de forme parfaitement droite jusqu'à l'amorce des arcs de cercle qui forment les voûtes des couloirs.

Les voûtes des couloirs ont une forme en quart d'arc de cercle de manière à ce que le flux d'eau central et les bulles d'air soient bien contenus jusqu'à l'arrière de la coque, assurant ainsi une meilleure glisse.

Les deux plans inclinés en V des couloirs sont reliés entre eux à leur base par une semelle plate longitudinale dont la largeur représente environ 6 à 10 % de la largeur totale des deux couloirs.

Selon un mode de réalisation préféré, la partie plate au fond du V des couloirs faisant office de semelle a une largeur de 10 % par rapport à la largeur totale des deux couloirs.
Cette semelle commence progressivement en partant de l'étrave pour obtenir une largeur uniforme de l'entrée d'eau.

Ladite semelle est la partie la plus basse du profil de la coque.

Selon un mode de réalisation préféré, ladite semelle est renforcée pour pouvoir absorber quelques chocs.

Les deux plans inclinés formant le V central des couloirs doivent être plus inclinés formant un V central plus fermé que les deux autres plans inclinés qui forment eux le second V.

L'angle des plans inclinés formant le V du rail est compris entre 40° et 60°.

L'angle des plans inclinés formant le V du fond de la coque est compris entre 55° et 75°.

Il y a une différence entre les deux V d'un angle d'environ 15°.

Les couloirs du rail sont parallèles de l'étrave jusqu'au tableau arrière de la coque.

Les couloirs du rail sont de même largeur de l'étrave jusqu'au tableau arrière de la coque.

Les couloirs sont de même profondeur de la zone d'entrée d'eau jusqu'à la sortie du tableau arrière.

La profondeur de la voûte des couloirs du rail est d'environ 8 à 14 % de la largeur totale du rail.

La profondeur de la voûte des couloirs du rail est de 10 % de la largeur totale du rail.

L'amorce des couloirs doit commencer au niveau de la proue de la coque.

Selon un autre mode de réalisation, la coque comporte deux autres couloirs parallèles aux premiers couloirs, ces seconds couloirs ont un profil en coupe de part et d'autre de la semelle pour former deux plans inclinés formant un troisième V (V3) moins incliné que le premier V (V1), ces deux plans inclinés des deuxièmes couloirs, du troisième couloir V (V3) sont de forme parfaitement droite jusqu'à l'amorce des arcs de cercle qui forment les voûtes desdits couloirs.

La profondeur des voûtes de ces couloirs est deux fois moins profonde que celle des premiers couloirs.

La largeur des.voûtes de ces deuxièmes couloirs est de 1/12 à 1/30 de la largeur de la coque.

La largeur des voûtes des premiers couloirs est de 1/24 à 1/60 de la largeur de la coque.

L'amorce de ces deuxièmes couloirs se situe au un tiers de la longueur de la coque, à partir de la proue jusqu'à la poupe ou tableau arrière.

Ces deuxièmes couloirs qui forment un troisième V (V3) suppriment les dernières projections latérales d'eau.

Les dessins ci-joints sont donnés à titre d'exemples et ne sont pas limitatifs de l'invention. Ils représentent seulement un mode de réalisation de l'invention et permettront de la comprendre aisément.
La figure 1 est une vue de l'engin nautique soit un bateau vu de face.
La figure 2 est une vue du bateau vu de côté.
La figure 3 est une vue de la coque du bateau vu de dessous de manière à mettre en évidence le rail profilé selon l'invention.
La figure 4 est une vue en coupe transversale de l'ensemble du volume du bateau mettant notamment en évidence la coupe de la coque, la coupe du rail et la coupe du fond de coque du bateau.

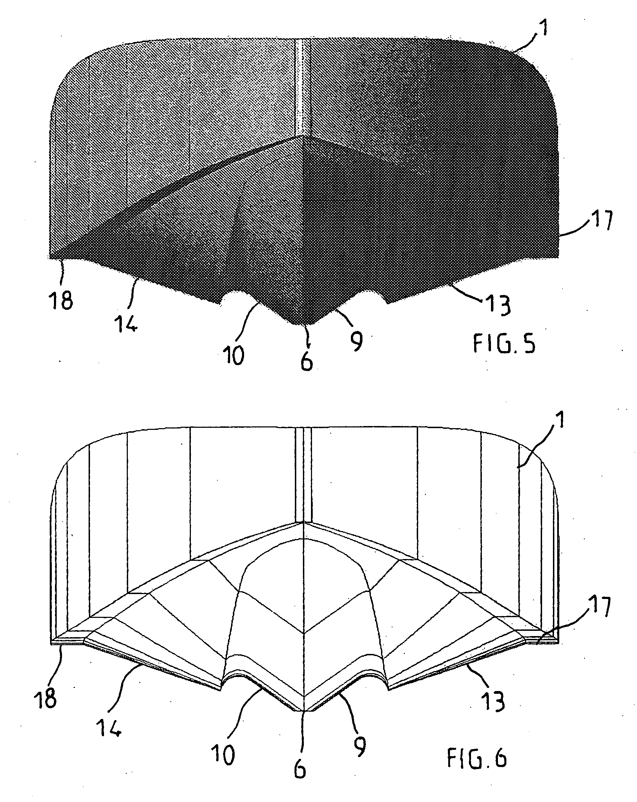

La figure 5 est une vue du bateau vu au niveau de l'étrave.
La figure 6 est une vue selon la figure 5 avec les lignes de coupe mettant en évidence le profil de la carène et notamment le profil du rail selon l'invention.

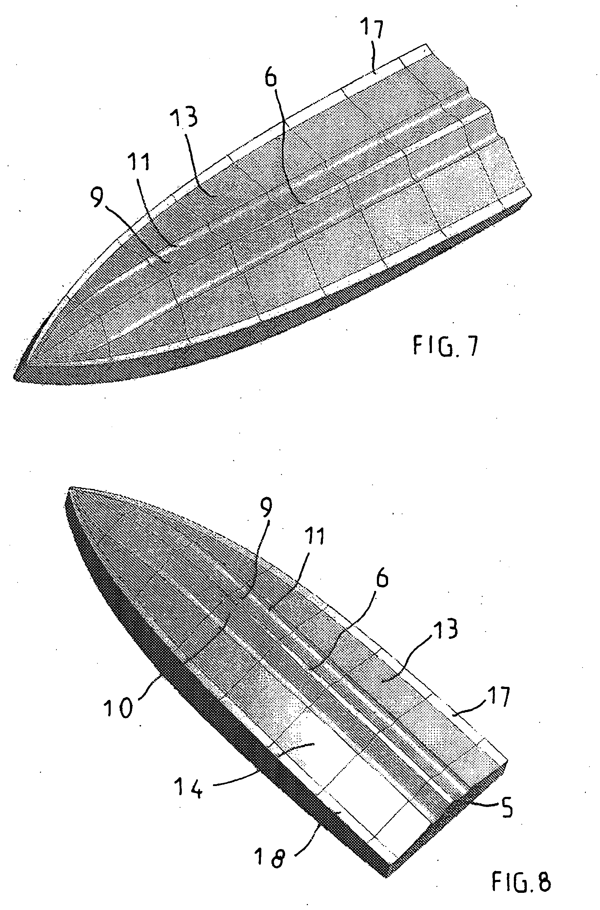

La figure 7 est une vue en perspective de la coque du bateau mettant en évidence le profil de la coque et en particulier du rail.
La figure 8 est une vue selon la figure 7 sous un autre angle pour mettre en évidence cette forme particulière du rail.
La figure 9 est une vue en perspective de la coque du bateau notamment au niveau de l'étrave et ce de manière à mettre en évidence l'amorce du rail, l'amorce des couloirs de guidage et l'amorce de la semelle.
La figure 10 est une vue en coupe simplifiée de la coque du bateau pour mettre en évidence le profil de la carène et notamment du rail de guidage.
La figure 11 est une vue en perspective vue de dessous de la coque du bateau vue de la proue.
La figure 12 est une vue en perspective mettant en évidence l'ensemble de la coque vue en perspective avec en premier plan l'étrave.

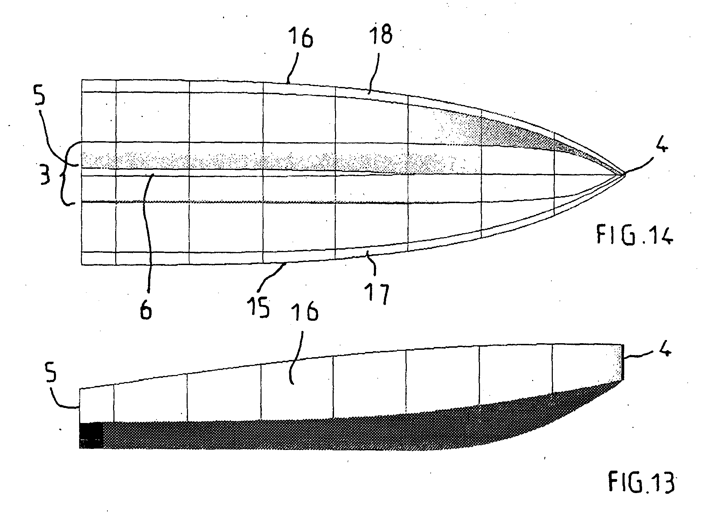

La figure 13 est une vue simplifiée de la vue du bateau vu de côté.
La figure 14 est une vue simplifiée du bateau vu de dessous.
La figure 15 est une vue du second mode de réalisation de la coque selon l'invention vue en coupe transversale.
La figure 16 est une vue de face de la coque vue par l'étrave mettant en évidence les lignes de fuite. Elle met en évidence les deux couloirs de chaque bord.
La figure 17 est une vue de côté de la coque selon le mode de réalisation représenté à la figure 15.
La figue 18 est une vue de la coque vue de dessus avec ses lignes de fuite.
La figure 19 est une vue de la coque vue de dessous et vue en perspective.

La coque 1 pour engin de navigation a une carène et un profil particulier.

Cette carène 2 est caractérisée par au moins un rail 3 profilé de l'étrave jusqu'au tableau arrière 5.

Ledit rail 3 est formé d'une semelle axiale 6 plate reliant deux couloirs parallèles 7 et 8 parallèle de l'étrave 4 au tableau arrière 5.

Ces couloirs 7, 8 sont de même largeur de même profondeur de la zone d'entrée d'eau au niveau de l'étrave 4 jusqu'au tableau arrière 5.

Ces deux couloirs 7 et 8 issus de la semelle axiale 6 ont un profil en coupe et de part et d'autre de la semelle 6 pour former deux plans inclinés 9 et 10 formant un premier V, V1. Ces deux plans 9, 10 inclinés se terminent dans leur partie supérieure par deux profils en arc de cercle 11 et 12 qui se prolongent ensuite par deux autres plans inclinés 13 et 14 formant un deuxième V, V2 moins incliné que le premier V1, lesdits plans 13, 14 inclinés vont vers les oeuvres mortes 15 et 16.

Ces plans inclinés 13, 14 qui vont vers les oeuvres mortes 15 et 16 se terminent par deux parties plates 17 et 18.

La largeur B des couloirs 7, 8 a une dimension qui représente 1/3 à 40 % de la largeur A de la coque.

Les deux plans inclinés 9 et 10 qui forment le premier V V1 des couloirs 7, 8 sont de forme parfaitement droite jusqu'à l'amorce des profils 11 et 12 en arc de cercle qui forment les voûtes des couloirs 7, 8.

Les voûtes des couloirs 7, 8 ont une forme en quart d'arc de cercle de manière à ce que le flux d'eau central et les bulles d'air soient bien contenus jusqu'à l'arrière de la coque assurant ainsi une meilleure glisse.

Le mélange de bulles d'air et d'eau permet à cette masse d'être compressible donc de mieux absorber les chocs.

L'engin nautique absorbe donc mieux les vagues que ce soit à petite vitesse ou à grande vitesse.

Les deux plans inclinés 9 et 10 en V des couloirs sont reliés entre eux à la base par une semelle 6.

Cette semelle 6 plate longitudinale a une largeur qui représente environ 6 à 10 % de la largeur totale des deux couloirs soit B.

Selon le mode de réalisation représenté à la figure 4, la largeur de cette semelle 6 représente 8 % par rapport à la largeur totale des deux couloirs, largeur référencée B à la figure 4.

Cette semelle 6 commence progressivement en partant de l'étrave 4 pour obtenir une largeur uniforme de l'entrée de l'eau.

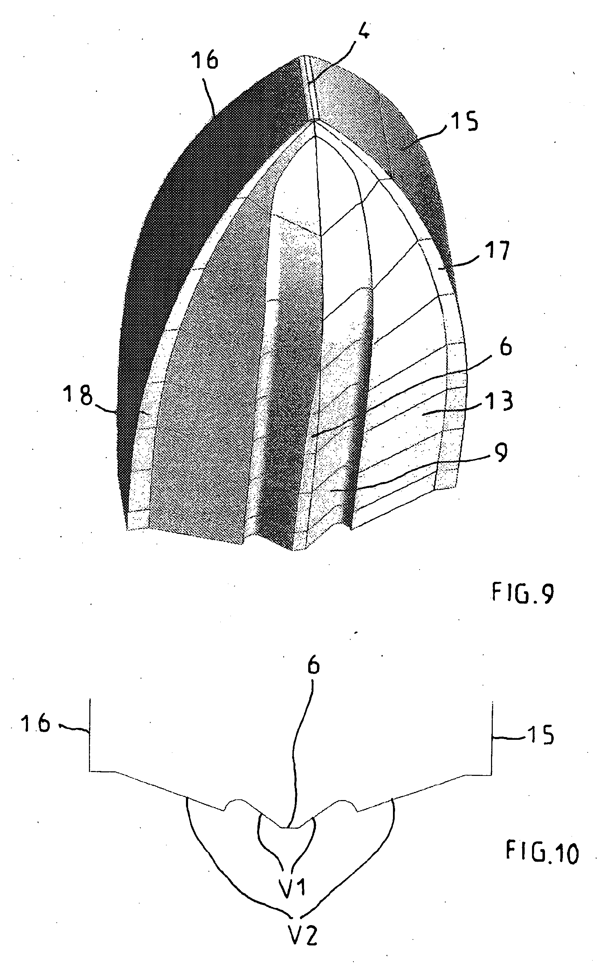

On peut voir l'amorce de cette semelle 6 au niveau de l'étrave aux figures 9, 11 et 12.

Cette semelle 6 peut bien entendu être renforcée par différents matériaux pour absorber les chocs.

Cette semelle 6 peut faire office de semelle d'échouage.

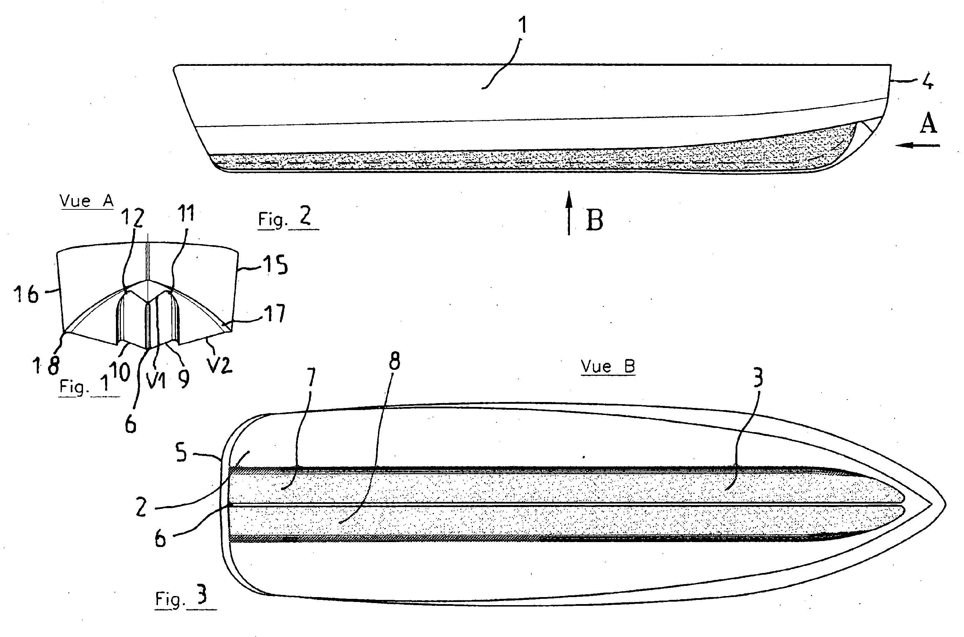

Les deux plans inclinés 9 et 10 formant le V central référencé V1 à la figure 10 formant le V central des couloirs doivent être plus inclinés formant un V1 central plus fermé que les deux autres plans inclinés 13 et 14 qui forment eux le second V soit V2 référencé à la figure 2.

L'angle des plans inclinés 9 et 10 formant le V V1 du rail est compris entre 40 et 60 °.

L'angle des plans inclinés 13 et 14 formant le V V2 du fond de coque est compris entre 55° et 75°.

Comme le met en évidence la figure 4, la différence d'angle β entre V1 et V2 est d'environ 15°.

Comme le montrent les différentes figures, les couloirs 7, 8 du rail 3 sont de même largeur de l'étrave 4 au tableau arrière 5.

Les couloirs 7, 8 sont de même profondeur de la zone d'entrée d'eau jusqu'à la sortie du tableau arrière 5.

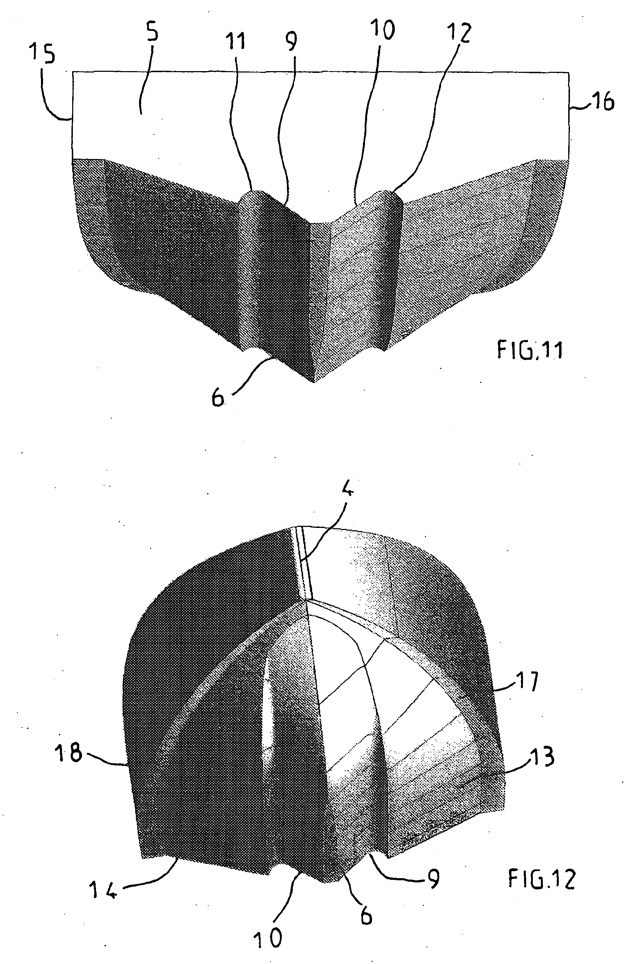

L'amorce des couloirs 7, 8 comme représentée notamment à la figure 12 met en évidence que ceux-ci doivent commencer au niveau de la proue ou de l'étrave 4.

La profondeur de la voûte des couloirs du rail est d'environ 8 à 14 % de la largeur totale du rail soir B.

Selon un mode de réalisation préféré, la profondeur de la voûte des couloirs des rails est de 10 % de la largeur totale du rail soit B.

L'engin de navigation peut être un bateau à moteur, bateau à voile, hydroglisseur, scooter des mers et jet ski.

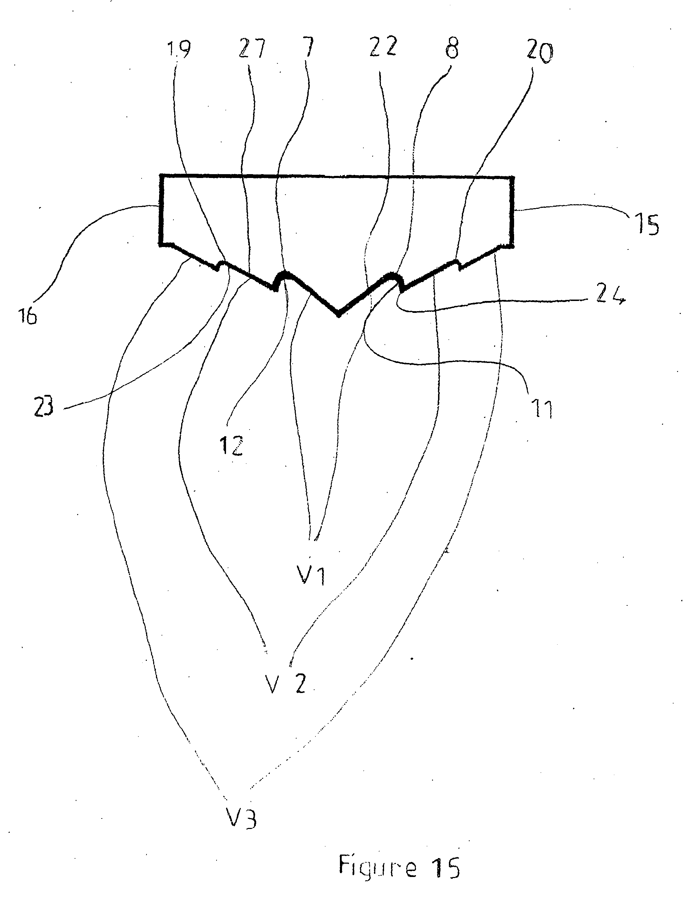

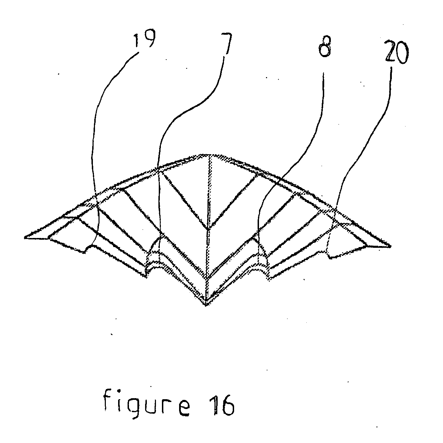

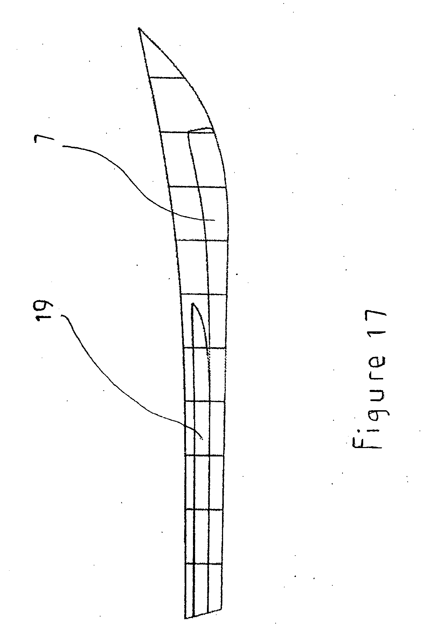

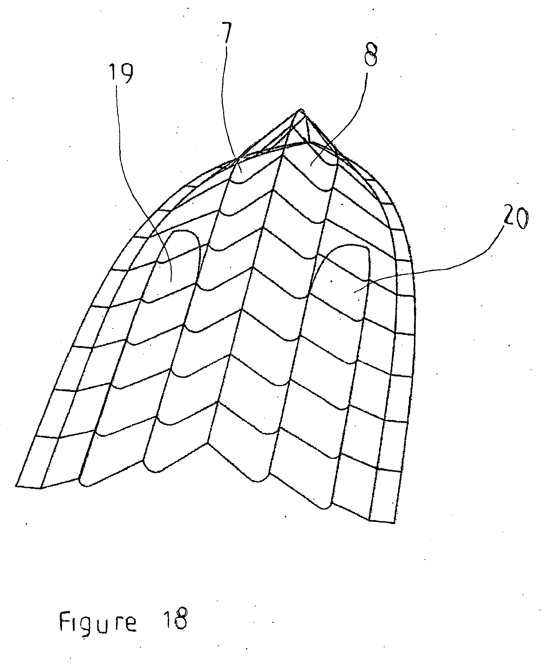

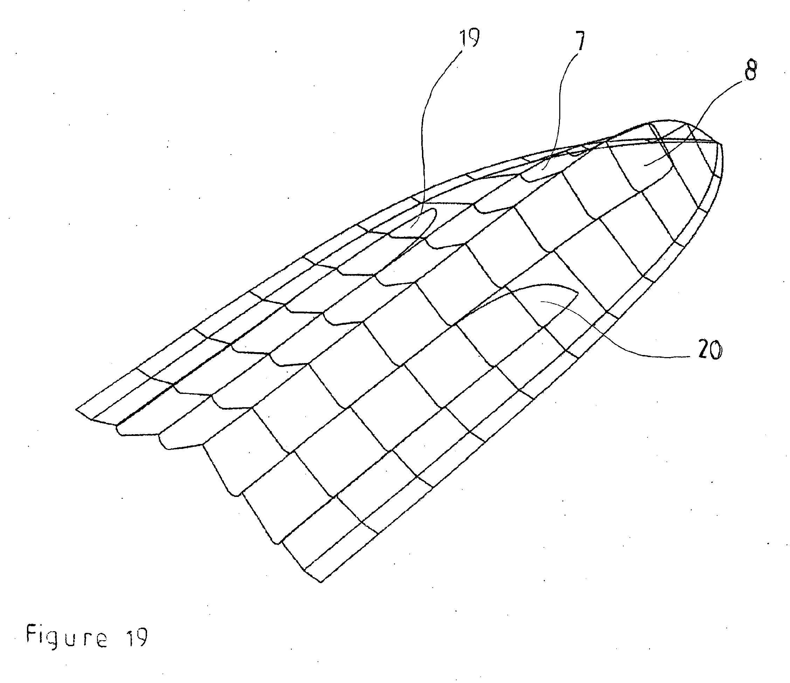

La réalisation présentée dans les figures 15 à 19 met en évidence un mode de réalisation qui comporte deux autres couloirs 19 et 20, ces seconds couloirs 19 et 20 sont parallèles aux premiers couloirs 7 et 8.

Ces seconds couloirs 19 et 20 ont un profil en coupe de part et d'autre de la semelle pour former deux plans inclinés 21 et 22 formant un troisième V (V3), ces plans inclinés 21 et 22 sont de forme parfaitement droite jusqu'à l'amorce des profils en arc de cercle 23, 24 qui forment les voûtes des couloirs 19 et 20.

Les deux plans inclinés 21 et 22 sont moins inclinés que les plans 9 et 10 formant le premier V (V1).

La profondeur des voûtes de ces couloirs 19 et 20 est deux fois moins profonde que celle des premiers couloirs 7 et 8, la largeur des voûtes de ces profils en arc de cercle 23, 24 de ces deuxièmes couloirs est de 1/12 à une 1/30 de la largeur de la coque.

L'amorce de ces deuxièmes couloirs 19 et 20 se situe au tiers de la longueur de la coque à partir de la proue jusqu'à la poupe ou tableau arrière.

### REFERENCES

1. Coque
2. Carène
3. Rail
4. Etrave
5. Tableau arrière
6. Semelle axiale
7. Couloir
8. Couloir
9. Plan incliné
10. Plan incliné
   Premier V : V1
11. Profil en arc de cercle
12. Profil en arc de cercle
13. Plan incliné formant V2
14. Plan incliné formant V2
   Deuxième V : V2
15, 16. OEuvres mortes
17. Partie plate
18. Partie plate
   B. Largeur des couloirs
A. Largeur de la coque (carène)
β : 15° différence d'angle en V1 et V2
   Troisième V : V3
19. Couloir
20. Couloir
21. Plan incliné du troisième V (V3)
22. Plan incliné du troisième V (V3)
23. Profil en arc de cercle
24. Profil en arc de cercle

## Revendications

1. Coque (1) pour engin de navigation ayant une carène (2) qui a un profil particulier, ladite carène (2) ayant au moins un rail (3) profilé de l'étrave (4) jusqu'au tableau arrière (5), ledit rail (3) est formé d'une semelle (6) axiale plate reliant deux couloirs (7, 8) parallèles de l'étrave (4) au tableau arrière (5), la coque étant **caractérisée en ce que** les deux couloirs (7,8) sont de même largeur, de même profondeur de la zone d'entrée d'eau à la sortie du tableau arrière (5), les couloirs issus de la semelle (6) ont un profil en coupe de part et d'autre de la semelle (6) pour former deux plans inclinés (9, 10) en forme de premier V (V1) et se terminent par deux profils (11, 12) en quart d'arc de cercle qui se prolongent ensuite par deux autres plans inclinés (13, 14) formant un deuxième V (V2) moins incliné que le premier qui vont vers les oeuvres mortes (15,16).

2. Coque (1) pour engin de navigation selon la revendication 1 **caractérisée par le fait**
**que** la largeur desdits couloirs (7, 8) a une dimension qui représente 1/3 à 40% de la largeur de la coque (1).

3. Coque (1) pour engin de navigation selon la revendication 1 **caractérisée par le fait**
**que** les deux plans inclinés (9, 10) du premier V (V1) des couloirs (7, 8) sont de forme parfaitement droite jusqu'à l'amorce des arcs de cercle (12, 13) qui forment les voûtes des couloirs (7, 8).

4. Coque (1) pour engin de navigation selon l'une quelconque des revendications 1 à 3 **caractérisée par le fait**
**que** les voûtes des couloirs (7, 8) ont une forme en quart d'arc de cercle de manière à ce que le flux d'eau central et les bulles d'air soient bien contenus jusqu'à l'arrière de la coque (1), assurant ainsi une meilleure glisse.

5. Coque (1) pour engin de navigation selon l'une quelconque des revendications 1 à 3 **caractérisée par le fait**
**que** les deux plans inclinés (9, 10) du premier V (V1) des couloirs (7, 8) sont reliés entre eux à leur base par la semelle (6) plate longitudinale dont la largeur représente environ 6 à 10 % de la largeur totale des deux couloirs.

6. Coque (1) pour engin de navigation selon l'une quelconque des revendications 1 à 5 **caractérisée par le fait**
**que** la partie plate au fond du premier V (V1) des couloirs (7, 8) faisant office de semelle (6) a une largeur de 8 % par rapport à la largeur totale des deux couloirs (7, 8).

7. Coque (1) pour engin de navigation selon la revendication 1 **caractérisée par le fait**
**que** la semelle (6) commence progressivement en partant de l'étrave (4) pour obtenir une largeur uniforme de l'entrée d'eau.

8. Coque (1) pour engin de navigation selon la revendication 1 **caractérisée par le fait**
**que** ladite semelle (6) est la partie la plus basse du profil de la coque (1).

9. Coque (1) pour engin de navigation selon la revendication 1 **caractérisée par le fait**
**que** les deux plans inclinés (9, 10) formant le premier V (V1) central des couloirs (7, 8) doivent être plus inclinés formant le premier V central (V1) plus fermé que les deux autres plans (13, 14) inclinés qui forment eux le second V (V2).

10. Coque (1) pour engin de navigation selon la revendication 1 **caractérisée par le fait**
**que** l'angle des plans inclinés (9, 10) formant le premier V (V1) du rail est compris entre 40° et 60°.

11. Coque (1) pour engin de navigation selon la revendication 1 **caractérisée par le fait**
**que** l'angle des plans inclinés (13, 14) formant le deuxième V (V2) du fond de la coque (1) est compris entre 55° et 75°.

12. Coque (1) pour engin de navigation selon la revendication 1 **caractérisée par le fait**
**que** les couloirs (7, 8) du rail (3) sont parallèles de l'étrave (4) jusqu'au tableau arrière (5) de la coque (1) ; les couloirs (7, 8) du rail (3) sont de même largeur de l'étrave (4) jusqu'au tableau arrière (5) de la coque (1) ; les couloirs (7, 8) sont de même profondeur de la zone d'entrée d'eau jusqu'à la sortie du tableau arrière (5).

13. Coque (1) pour engin de navigation selon la revendication. 1 **caractérisée par le fait**
**que** la profondeur de la voûte des couloirs (7, 8) du rail (3) est d'environ 8 à 14 % de la largeur totale du rail.

14. Coque (1) pour engin de navigation selon la revendication 1 **caractérisée par le fait**
**que** la profondeur de la voûte des couloirs (7, 8) du rail est de 10 % de la largeur totale du rail (3).

15. Coque (1) pour engin de navigation selon la revendication 1 **caractérisée par le fait**
**que** ladite coque comporte deux autres couloirs parallèles (19, 20) aux premiers couloirs (7, 8), ces seconds couloirs (7, 8) ont un profil en coupe de part et d'autre de la semelle pour former deux plans inclinés (21,22) formant un troisième V (V3) moins incliné que le premier V (V1), ces deux plans inclinés (21, 22) des deuxièmes couloirs (19, 20), du troisième couloir V (V3) sont de forme parfaitement droite jusqu'à l'amorce des arcs de cercle (23, 24) qui forment les voûtes desdits couloirs (19, 20).

16. Coque (1) pour engin de navigation selon la revendication 15 **caractérisée par le fait**
**que** la profondeur des voûtes de ces couloirs (19,20) est deux fois moins profonde que celle des premiers couloirs.

17. Coque (1) pour engin de navigation selon la revendication 15 **caractérisée par le fait**
**que** la largeur des voûtes de ces deuxièmes couloirs est de 1/12 à 1/30 de la largeur de la coque.

18. Coque (1) pour engin de navigation selon la revendication 15 **caractérisée par le fait**
**que** l'amorce de ces deuxièmes couloirs (19, 20) se situe au un tiers de la longueur de la coque, à partir de la proue jusqu'à la poupe ou tableau arrière

## Claims

1. Hull (1) for sailing craft with a bottom (2) which has a particular profile, the aforementioned bottom (2) having at least one rail (3) shaped from stem (4) to transom (5), said rail (3) being formed by a flat axial sole (6) linking two parallel passageways (7, 8) from stem (4) to transom (5), the hull (1) being **characterized in that** the two passageways are of similar width, similar depth of water inlet at the transom (5) exit, the passageways resulting from sole (6) having a cross-sectional profile on either side of sole (6) to form two inclined planes (9, 10) forming first shape V (V1) and terminate in two arc of quarter circle profiles (11, 12) which are further extended by two other inclined parts (13, 14) forming another V shape (V2), less inclined than the first leading to the upper works (15,16).

2. Hull (1) for sailing craft according to claim 1 **characterized in that**
the width of the said passageways (7, 8) accounts for 1/3 to 40% of the width of hull (1).

3. Hull (1) for sailing craft according to claim 1 **characterized in that**
two inclined planes (9, 10) of the first V shape (V1) of passageways (7, 8) are of perfectly straight up to the beginning of arcs of circle (12, 13) which form the arches of passageways (7, 8).

4. Hull (1) for sailing craft according to any of claims 1 to 3 **characterized in that**
the arches of passageways (7, 8) have an arc of quarter circle form so that the central water stream and the air bubbles are well contained up to the rear of hull (1), thus ensuring better sliding.

5. Hull (1) for sailing craft according to any of claims 1 to 3 **characterized in that** the two inclined planes (9, 10) of first V shape (V1) of passageways (7, 8) are linked at their base by the flat longitudinal sole (6) the width of which accounts for approximately 6 to 10% of the total width of the two passageways.

6. Hull (1) for sailing craft according to any of claims 1 to 5 **characterized in that**
the flat part at the bottom of first V shape (V1) of passageways (7, 8) acting as sole (6) has a width equal to 8% of the total width of the two passageways (7, 8).

7. Hull (1) for sailing craft according to claim 1 **characterized in that**
sole (6) begins gradually from stem (4) to provide a uniform width of water inlet.

8. Hull (1) for sailing craft according to claim 1 **characterized in that**
the said sole (6) is the lowest part of the profile of hull (1).

9. Hull (1) for sailing craft according to claim 1 **characterized in that**
the two inclined planes (9, 10) forming the first central V shape (V1) of passageways (7, 8) has to be more inclined to form the first central V shape (V1) that is narrower than the two other inclined parts (13, 14) which form second V shape (V2).

10. Hull (1) for sailing craft according to claim 1 **characterized in that**
the angle of the inclined planes (9, 10) forming the first V (V1) shape of the rail is between 40° and 60°.

11. Hull (1) for sailing craft according to claim 1 **characterized in that**
the angle of the inclined planes (13, 14) forming the second V shape (V2) of hull (1) bottom is between 55° and 75°.

12. Hull (1) for sailing craft according to claim 1 **characterized in that**
passageways (7, 8) of rail (3) are parallel from stem (4) to transom (5) of hull (1); passageways (7, 8) of rail (3) are the same width from stem (4) to transom (5) of hull (1); passageways (7, 8) are the same depth from water inlet zone to transom (5) exit.

13. Hull (1) for sailing craft according to claim 1 **characterized in that**
the depth of the arches of passageways (7, 8) of rail (3) is approximately 8 to 14% the total width of the rail.

14. Hull (1) for sailing craft according to claim 1 **characterized in that**
the depth of the arches of rail passageways (7, 8) is 10% of the total width of rail (3).

15. Hull (1) for sailing craft according to claim 1 **characterized in that**
the aforementioned hull comprises two other passageways (19, 20) parallel to first passageways (7, 8), these second passageways (19, 20) have a cross-sectional profile on both sides of the sole forming two inclined planes (21, 22) forming a third V shape (V3) less inclined than the first V shape (V1), these two inclined planes (21, 22) of the second passageways (19, 20) and third V shape passageway (V3) are perfectly straight up to the beginning of the arcs of circle (23, 24) which form the arches of the aforesaid passageways (19, 20).

16. Hull (1) for sailing craft according to claim 15 **characterized in that**
the depth of the arches of these passageways (19,20) is twice less deep than that of the first passageways.

17. Hull (1) for sailing craft according to claim 15 **characterized in that**
the width of the arches of these second passageways is 1/12 to 1/30 the width of the hull.

18. Hull (1) for sailing craft according to claim 15 **characterized in that**
the start of these second passageways (19, 20) is located one third along the hull from the prow to the poop or transom.

## Patentansprüche

1. Schiffsrumpf (1) für ein Wasserfahrzeug dessen Unterwasserrumpf (2) ein besonderes Profil besitzt, nämlich einen Unterwasserrumpf (2) mit mindestens einem schienenartigen Profil (3), das vom Vordersteven (4) bis zum Heckspiegel (5) verläuft, wobei dieses Schienenprofil (3) aus einer axial verlaufenden, flachen Sohle (6) besteht, die zwei parallele, vom Vordersteven (4) bis zum Heckspiegel (5) laufende Gleitbahnen (7, 8) verbindet, und dass der Schiffsrumpf **dadurch gekennzeichnet ist, dass** die beiden Gleitbahnen (7,8) vom Eintrittsbereich des Wassers bis zum Ausgang am Heckspiegel (5) die gleiche Breite und die gleiche Tiefe haben, dass die sich an die Sohle (6) anschließenden Gleitbahnen im Schnitt auf jeder Seite der Sohle (6) zwei geneigte Ebenen (9, 10) sind, die ein erstes V-Profil bilden (V1), das durch zwei viertelkreisförmige Profile (11, 12) abgeschlossen wird, das dann durch zwei weitere geneigte Flächen (13, 14) fortgesetzt wird, die ein zweites V-Profil (V2) mit geringerer Neigung, als das erste, bilden und bis zum Oberwasserrumpf (15, 16) verlaufen.

2. Schiffsrumpf (1) für Wasserfahrzeuge gemäß Patentanspruch 1, **gekennzeichnet dadurch, dass** die Breite dieser Gleitbahnen (7, 8) ein Maß besitzen, das etwa 1/3 bis 40 % der Breite des Schiffsrumpfes (1) beträgt.

3. Schiffsrumpf (1) für Wasserfahrzeuge gemäß Patentanspruch 1, **gekennzeichnet dadurch, dass** die beiden geneigten Flächen (9, 10) des ersten V-Profils (V1) der Gleitbahnen (7, 8) bis zum Beginn der Kreisbögen (12, 13), welche eine Art Kehle der Gleitbahn darstellen, völlig gerade sind.

4. Schiffsrumpf (1) für Wasserfahrzeuge gemäß einem der Patentansprüche 1 bis 3, **gekennzeichnet dadurch, dass** die Kehlen der Gleitbahnen (7, 8) die Form eines Viertelkreises haben, so dass das in der Mitte durchströmende Wasser und die Luftblasen bis hinter den Schiffsrumpf (1) gut darin zurückgehalten werden, so dass das Gleiten verbessert wird.

5. Schiffsrumpf (1) für Wasserfahrzeuge gemäß Patentanspruch 1 bis 3, **gekennzeichnet dadurch, dass** die beiden geneigten Flächen (9, 10) des ersten V-Profils (V1) der Gleitbahnen (7, 8) miteinander an ihrer Basis durch die flache, in Längsrichtung verlaufende Sohle (6) verbunden sind, deren Breite etwa 6 bis 10 % der der Gesamtbreite der beiden Gleitflächen beträgt.

6. Schiffsrumpf (1) für Wasserfahrzeuge gemäß einem der Patentansprüche 1 bis 5, **gekennzeichnet dadurch, dass** der als Sohle (6) dienende, flache Bereich am Boden des ersten V-Profils (V1) der Gleitbahnen (7, 8) eine Breite von 8 % der Gesamtbreite der beiden Gleitbahnen (7, 8) besitzt.

7. Schiffsrumpf (1) für Wasserfahrzeuge gemäß Patentanspruch 1, **gekennzeichnet dadurch, dass** die Sohle (6) vom Vordersteven (4) aus progressiv ausgebildet ist, um eine gleichmäßige Breite des Wassereintritts zu erhalten.

8. Schiffsrumpf (1) für Wasserfahrzeuge gemäß Patentanspruch 1, **gekennzeichnet dadurch, dass** die Sohle (6) der tiefste Teil des Profils des Schiffsrumpfes (1) ist.

9. Schiffsrumpf (1) für Wasserfahrzeuge gemäß Patentanspruch 1, **gekennzeichnet dadurch, dass** die beiden geneigten Flächen (9, 10), die das erste V-Profil (V1) der Gleitbahnen (7, 8) bilden, zur Bildung dieses ersten, mittleren, engeren V-Profils (V1) stärker geneigt sind, als die beiden anderen geneigten Flächen (13, 14), die das zweite V-Profil (V2) bilden.

10. Schiffsrumpf (1) für Wasserfahrzeuge gemäß Patentanspruch 1, **gekennzeichnet dadurch, dass** der Winkel der beiden geneigten Flächen (9, 10), die das erste V-Profil (V1) des Schienenprofils bilden, zwischen 40° und 60° beträgt.

11. Schiffsrumpf (1) für Wasserfahrzeuge gemäß Patentanspruch 1, **gekennzeichnet dadurch, dass** der Winkel der geneigten Flächen (13, 14), die das zweite V-Profil (V2) des Boden des Schiffsrumpfes (1) bilden, zwischen 55° und 75° beträgt.

12. Schiffsrumpf (1) für Wasserfahrzeuge gemäß Patentanspruch 1, **gekennzeichnet dadurch, dass** die Gleitbahnen (7, 8) des Schienenprofils (3) vom Vordersteven (4) bis zum Heckspiegel (5) des Schiffsrumpfes (1) parallel verlaufen, dass die Gleitbahnen (7, 8) des Schienenprofils (3) vom Vordersteven (4) bis zum Heckspiegel (5) des Schiffsrumpfes (1) die gleiche Breite haben und dass die Gleitbahnen (7, 8) vom Eintrittsbereich des Wassers bis zum Austritt am Heckspiegel (5) die gleiche Tiefe haben.

13. Schiffsrumpf (1) für Wasserfahrzeuge gemäß Patentanspruch 1, **gekennzeichnet dadurch, dass** die Tiefe der Kehle dieser Gleitbahnen (7, 8) des Schienenprofils (3) etwa 8 bis 14 % der Gesamtbreite des Schienenprofils beträgt.

14. Schiffsrumpf (1) für Wasserfahrzeuge gemäß Patentanspruch 1, **gekennzeichnet dadurch, dass** die Tiefe der Kehle dieser Gleitbahnen (7, 8) des Schienenprofils 10 % der Gesamtbreite des Schienenprofils (3) beträgt.

15. Schiffsrumpf (1) für Wasserfahrzeuge gemäß Patentanspruch 1, **gekennzeichnet dadurch, dass** der Schiffsrumpf zwei weitere Gleitflächen (19, 20) besitzt, die parallel zu den ersten Gleitflächen (7, 8) verlaufen, wobei die zweiten Gleitflächen (7, 8) beidseitig der Sohle ein Querschnittsprofil in Form von zwei geneigten Flächen (21, 22) besitzen, die ein drittes V-Profil (V3) bilden, das weniger geneigt ist als das erste V-Profil (V1), wobei die beiden geneigten Flächen (21, 22) der zweiten Gleitflächen (19, 20) der dritten V-Gleitfläche (V3) bis zum Beginn der Kreisbögen (23, 24), welche die Kehle der genannten Gleitflächen (19, 20) bilden, völlig gerade sind.

16. Schiffsrumpf (1) für Wasserfahrzeuge gemäß Patentanspruch 15, **gekennzeichnet dadurch, dass** die Tiefe der Kehle dieser Gleitbahnen (19, 20) zwei mal weniger tief ist als die der ersten Gleitbahnen.

17. Schiffsrumpf (1) für Wasserfahrzeuge gemäß Patentanspruch 15, **gekennzeichnet dadurch, dass** die Breite der Kehlen dieser zweiten Gleitbahnen 1/12 bis 1/30 der Breite des Schiffsrumpfes beträgt.

18. Schiffsrumpf (1) für Wasserfahrzeuge gemäß Patentanspruch 15, **gekennzeichnet dadurch, dass** der Anfang dieser zweiten Gleitbahnen (19, 20) in Höhe des ersten Drittels der Rumpflänge vom Vordersteven aus liegt und bis zum Heck oder Heckspiegel verläuft.
